# EUROPÄISCHE PATENTSCHRIFT

(11) **EP 0 388 392 B1**
(45) Veröffentlichungstag und Bekanntmachung des Hinweises auf die Patenterteilung: **11.01.1995**
(21) Anmeldenummer: 90890024.4
(22) Anmeldetag: 02.02.1990
(51) Int. Cl.: G01N 1/22

(54) **Verfahren und Einrichtung zur stetigen Entnahme einer Teilmenge aus einem Gasstrom**
Method and device for continuous removal of a part of a gasstream
Procédé et dispositif pour enlever en continu une partie d'un courant de gaz

(30) Priorität: 13.03.1989 AT 575/89
(43) Veröffentlichungstag der Anmeldung: 19.09.1990
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Hohenberg, Günter, Prof. Dr. Ing., A-8010 Graz (AT); Denk, Heimo, Dipl.-Ing., A-8045 Graz (AT)
(74) Vertreter: Pinter, Rudolf, Dipl.-Ing.

(56) Entgegenhaltungen:
- JP-A- 1 038 626
- US-A- 4 446 748

## Beschreibung

Die Erfindung betrifft ein Verfahren zur stetigen Entnahme einer Teilmenge aus einem Gasstrom zur nachfolgenden stetigen Vermischung mit einem gasförmigen Verdünnungsstrom, wobei die Teilmenge aus dem Gasstrom abgezweigt und der Volumenstrom der Teilmenge geregelt wird. Weiters betrifft die Erfindung auch eine Einrichtung zur Durchführung eines derartigen Verfahrens, mit einer den Gasstrom führenden Sondenleitung, in welche eine die Teilmenge abzweigende Entnahmeleitung mündet, und einem Mischtunnel, in den eingangsseitig das abströmseitige Ende der Entnahmeleitung und eine den Verdünnungsstrom führende Zuführleitung mündet.

Verfahren und Einrichtung der genannten Art eignen sich insbesonders beispielsweise für Meßvorgänge an einem Gasstrom, bei denen im Hinblick auf die erforderliche Dimensionierung der Meßvorrichtung nur eine repräsentative Teilmenge untersucht werden soll. Weiters sind aber auch Anwendungen möglich, die etwa zur Herstellung von Gasgemischen für verschiedenste weitere Verwendungen dienen.

Es ist unter anderem zur Analyse der Bestandteile und Schwebstoffe in Gasen aus chemischen Prozessen, beispielsweise den Abgasen von Verbrennungsmotoren und hier insbesonders von Dieselmotoren, häufig notwendig, den zu analysierenden Gasstrom mit anderen gasförmigen Verdünnungsströmen, vorzugsweise Luft, zu verdünnen. So werden etwa für die Messung der Partikelemission von Dieselmotoren sogenannte Verdünnungstunnel eingesetzt, in die das Motorabgas eingeleitet und mit Reinluft bei turbulenter Strömung homogen gemischt wird, um Immissionsbedingungen zu simulieren. Aus Platz- und Leistungsgründen ist es dabei häufig wünschenswert, nur eine Teilmenge aus dem Gasstrom zu entnehmen und nach der Verdünnung zu untersuchen. Das wesentliche Problem bei einer derartigen Teilstrom-Verdünnung ist die Regelung der entnommenen Teilmenge, da es wegen der auf alle Fälle zu vermeidenden Beeinflussung der Zusammensetzung der Teilmenge zumeist nicht statthaft ist, mit Drosselklappen oder ähnlichen Vorrichtungen unmittelbar den möglichen Volumenstrom der Teilmenge zu regeln.

Bei einem für die Teilstromverdünnung von Dieselabgas bekannt gewordenen Verfahren der eingangs genannten Art wird durch je ein eingangsseitig und ausgangsseitig am eigentlichen Verdünnungssystem angeordnetes Gebläse der Druck im Verdünnungssystem bzw. Verdünnungsstrom variiert, wodurch unmittelbar der abströmseitig aus dem Verdünnungsstrom auf die Teilmenge wirkende Gegendruck beeinflußt und damit der Volumenstrom der Teilmenge geregelt wird. Dieses bekannte Verfahren bzw. die entsprechende Einrichtung hat jedoch einige entscheidende Nachteile.

Zufolge der eingangsseitigen Druckerhöhung des Verdünnungsstromes sowie der dabei auftretenden Verdichterverluste steigt die Temperatur des zur Vermischung mit der Teilmenge kommenden Verdünnungsstromes an, was - um jede Beeinflussung der nachfolgenden Messung zu vermeiden - oft eine relativ aufwendige Kühlung des Verdünnungsstroms erfordert. Bei der erwähnten Partikelmessung an Dieselabgas ist beispielsweise eine Eintrittstemperatur der Verdünnungsluft von 25 ± 5°C sowie eine maximale Temperatur der schließlich untersuchten Gasprobe von höchstens 52°C vorgeschrieben.

Weiters muß bei der bekannten Einrichtung prinzipbedingt das ausgangsseitig am Verdünnungssystem wirkende Sauggebläse mit der vollen Durchsatzmenge des Verdünnungsstroms - also einer ziemlich hohen Antriebsleistung - geregelt werden, womit ein entsprechend hoher Regelungsaufwand gegeben ist.

Der dritte wesentliche Nachteil der genannten bekannten Anordnung ergibt sich im Hinblick auf den maximal fahrbaren Gegendruck, beispielsweise wiederum im Abgas-Strömungssystem eines Dieselmotors. Dies ist deswegen von Bedeutung, da bei verschiedenen Auspuffkonfigurationen, speziell mit Rußfilter, in bestimmten Betriebspunkten ein relativ hoher Abgasgegendruck (bis ca. 250 mbar) auftreten kann. Wenn man dabei den Druck im eigentlichen Verdünnungssystem über das ausgangsseitige Sauggebläse regeln will, so bedingt dies neben der Steigerung der Gebläseantriebsleistung eine weitere Temperaturerhöhung der Verdünnungsluft mit weiter gesteigerten Kühlproblemen.

Weiters ist beispielsweise aus der JP-A-1 038 626 ein Probennahmegerät für Abgas bekannt, bei dem die Abzweigung einer Teilmenge aus einem Gasstrom über eine siebartige Vielfachweiche erzwungen wird. Um gleiche Druckverhältnisse in den Durchströmöffnungen dieser Weiche sicher zu stellen, wird abströmseitig mittels eines Teils der Verdünnungsluft ein Gegendruck aufgebaut, der dem Gegendruck in der abgezweigten Teilmenge entspricht. Damit kann in gewissen Grenzen sichergestellt werden, daß der relative Anteil der Teilmenge am Gesamtstrom unabhängig von den sonstigen Umständen unverändert bleibt.

Aufgabe der vorliegenden Erfindung ist es, die angeführten Nachteile des eingangs genannten Verfahrens bzw. der entsprechenden Einrichtung zu vermeiden und insbesonders ein Verfahren sowie eine Einrichtung der eingangs genannten Art so auszubilden, daß mit konstruktiv einfachen und die nachfolgende Messung bzw. sonstige Weiterverwendung der verdünnten Teilmenge in keiner Weise beeinflussenden Mitteln eine Regelung des Volumenstroms der abgezweigten Teilmenge möglich wird.

Dies wird gemäß der vorliegenden Erfindung erreicht durch ein Verfahren zur stetigen Entnahme einer Teilmenge aus einem Gasstrom zur nachfolgenden stetigen Vermischung mit einem gasförmigen Verdünnungsstrom, wobei die Teilmenge aus dem Gasstrom abgezweigt und zur Regelung des Volumenstromes der Teilmenge die Teilmenge vor der Vermischung mit dem Verdünnungsstrom durch einen Staubereich geführt wird, dem ein gegenüber dem Verdünnungsstrom erhöhten Druck aufweisender, regelbarer Steuerstrom zugeführt ist. Die entsprechende Ausgestaltung der Einrichtung sieht gemäß der Erfindung in der Entnahmeleitung der Teilmenge einen Staubereich vor, in den eine Steuerleitung mündet, über welche ein abhängig vom Druck des Gasstromes in der Sondenleitung regelbarer Steuerstrom zugeführt wird. Auf diese Weise ist eine Art "pneumatische Blende" geschaffen, mittels welcher der tatsächlich zur stetigen Vermischung mit dem Verdünnungsstrom gelangende Volumenstrom der Teilmenge ohne jede mechanische Beeinflussung geregelt werden kann. Insbesonders bei partikelbeladenen Gasströmen, wie etwa dem Abgas eines Dieselmotors, wird damit jede Möglichkeit zur vorzeitigen Partikelablagerung und damit zur Meßwertverfälschung vermieden. Weiters sind damit gegenüber dem Stande der Technik nur wesentlich kleinere Volumenströme (beim Stand der Technik der gesamte Verdünnungsstrom - gemäß der Erfindung nur der Steuerstrom für den Staubereich bzw. die pneumatische Blende) zu regeln, was wesentliche apparative Vereinfachungen ermöglicht.

Da der Druck im Verdünnungssystem nun nicht mehr prinzipbedingt eingangsseitig angehoben werden muß, ist jede zusätzliche Aufheizung des dort zugeführten Verdünnungsstroms vermieden, was wiederum - durch den Entfall von aufwendigen Kühleinrichtungen - Vereinfachungen gegenüber dem Stande der Technik ergibt.

Als dritter wesentlicher Vorteil ist hier noch die deutlich verminderte Baugröße einer Einrichtung nach der vorliegenden Erfindung gegenüber sonst Gleichartigen nach dem Stande der Technik anzuführen. Eingangsseitig des eigentlichen Verdünnungssystems kann - wie erwähnt - das beim Stande der Technik erforderliche relativ große Druckgebläse entfallen; ausgangsseitig ist ein im Bauvolumen wesentlich verkleinertes Sauggebläse einsetzbar. Beispielsweise im Zusammenhang mit der Verwendung einer erfindungsgemäßen Einrichtung auf einem Motorenprüfstand ist damit ein wesentlicher Vorteil gegenüber den - bei gleicher Auslegung - etwa doppelt so großen Einrichtungen nach dem Stande der Technik gegeben.

Nach einer besonders bevorzugten weiteren Ausbildung des erfindungsgemäßen Verfahrens wird der Steuerstrom unmittelbar aus dem Verdünnungsstrom vor dessen Vermischung mit der Teilmenge abgezweigt und vor der Zuführung zum Staubereich komprimiert. Dementsprechend ist bei der erfindungsgemäßen Einrichtung die Steuerleitung zwischen der Zuführleitung des Verdünnungsstromes und der Entnahmeleitung der Teilmenge vorgesehen und weist ein Gebläse auf. Obwohl prinzipiell der Steuerstrom auch völlig unabhängig vom Verdünnungsstrom zugeführt werden kann (für verschiedene Anwendungen sind beispielsweise auch unterschiedliche Träger- bzw. Markierungsgase, wie etwa Stickstoff oder dergleichen, möglich) ergibt sich mit der genannten Ausgestaltung doch der wesentliche Vorteil, daß der Steuerstrom aus dem zugeführten Verdünnungsstrom nach dessen allfälliger Kühlung, Filterung, Volumenstrommessung und dergleichen, abgezweigt werden kann, was eine weitere Verringerung des apparativen Aufwandes ermöglicht.

In weiterer Ausgestaltung der Erfindung ist vorgesehen, daß der Druck und/oder der zeitliche Volumenstrom des Steuerstromes abhängig vom Druck - insbesondere vom zeitlich gemittelten Druck - des Gasstromes geregelt wird. Damit kann auf einfache Weise unmittelbar auf Schwankungen des Gasstromes reagiert und der der Vermischung mit dem Verdünnungsstrom zugeführte Volumenstrom der Teilmenge repräsentativ für den Gasstrom gehalten werden.

Soferne beispielsweise aus Gründen einer von Anfang an zu hohen Temperatur des Verdünnungsstromes, sowie zur Vermeidung der Einbringung von Verunreinigungen über den Verdünnungsstrom, der zugeführte Verdünnungsstrom gekühlt und gefiltert wird, ist nach einer bevorzugten weiteren Ausbildung des erfindungsgemäßen Verfahrens vorgesehen, daß die Kühlung des Verdünnungsstromes vor der Filterung erfolgt. Dies ergibt unmittelbar den Vorteil, daß der dafür einzusetzende Kühler nicht aus rostfreiem Stahl und damit teuer ausgeführt werden muß. Bei der eingangs besprochenen Einrichtung nach dem Stande der Technik muß eine Kühlung des Verdünnungsstromes auf alle Fälle nach der eingangsseitigen Verdichtung und damit nach der vor dem Verdichter erfolgenden Filterung vorgesehen werden. Damit dann nicht - beispielsweise durch abblätternde Rußpartikel aus dem Kühler - wieder Verunreinigungen in den Verdünnungsstrom eingebracht werden, muß der Kühler aus Edelstahl bestehen, was noch zusätzlich den Nachteil hat, daß größere Kühlflächen zufolge der geringeren Wärmeleitfähigkeit von Edelstahl erforderlich sind.

Nach einer weiteren Ausgestaltung der erfindungsgemäßen Einrichtung ist der Staubereich im Bereich des abströmseitigen Endes der Entnahmeleitung angeordnet. Damit ist einerseits die Zugänglichkeit üblicherweise verbessert und andererseits eine unmittelbare Beeinflussung des Volumenstroms der Teilmenge im Bereich ihres Austrittes aus der Entnahmeleitung zur Vermischung mit dem Verdünnungsstrom gegeben.

Die Einmündung der Steuerleitung im Staubereich der Entnahmeleitung weist nach einer weiteren Ausgestaltung der Erfindung eine oder mehrere Steueröffnung(en) am inneren Umfang der Entnahmeleitung auf, wodurch eine konstruktiv einfache Lösung gegeben ist, bei der beispielsweise auch jegliche Ablagerung von Partikeln oder dergleichen aus der abgezweigten Teilmenge vermieden ist.

Nach einer besonders bevorzugten Ausgestaltung der Erfindung verläuft der an die Steueröffnung(en) anschließende Bereich der Steuerleitung im wesentlichen gegen die Strömungsrichtung der Teilmenge gerichtet. Damit wird auf einfache und wirkungsvolle Weise die erwünschte "Blenden"-Wirkung durch den aus der Steuerleitung in Gegenstromrichtung zur Teilmenge austretenden Steuerstrom verbessert, wobei durch die konkrete Ausrichtung des Mündungsbereiches die tatsächliche Blendenwirkung auch beeinflußbar ist.

Im Zusammenhang mit der oben genannten Anordnung des Staubereiches im Bereich des abströmseitigen Endes der Entnahmeleitung ist eine weitere Ausgestaltung der Erfindung von Vorteil, gemäß welcher die Einmündung der Steuerleitung im Staubereich der Entnahmeleitung von einem im wesentlichen zentral gegen das abströmseitige Ende der Entnahmeleitung gerichteten Mündungsrohrstück gebildet ist. Bei dieser konstruktiv einfachen Ausführung braucht an der Entnahmeleitung selbst überhaupt nichts geändert zu werden; die Blendenwirkung wird hier einfach durch das Gegenstrom-Einblasen des Steuerstromes erzielt.

Zur Regelung des dem Staubereich tatsächlich zugeführten Steuerstromes kann in weiterer Ausbildung der Erfindung das Gebläse in der Steuerleitung hinsichtlich Druck und/oder Volumenstrom des Steuerstromes regelbar sein, was eine konstruktiv einfache Lösung ohne die Notwendigkeit der Verwendung zusätzlicher Bauteile ergibt.

Nach einer anderen Ausbildung der Erfindung kann im letztgenannten Zusammenhang aber auch vorgesehen sein, daß in der Steuerleitung zwischen Gebläse und Staubereich ein regelbares Drosselorgan angeordnet ist; eine in der Einwirkung auf Volumenstrom und Druck des Steuerstromes ähnliche weitere Ausgestaltung der Erfindung sieht vor, daß die Steueröffnung(en) im Querschnitt verstellbar ist (sind). Dabei kann beispielsweise eine einzige in Form eines Ringspaltes ausgebildete Steueröffnung in ihrem Querschnitt einfach dadurch verstellt werden, daß die beiden den Ringspalt begrenzenden Teile der Entnahmeleitung relativ zueinander bewegbar sind.

Zur weiteren Beeinflussung des Steuerstromes kann schließlich nach einer anderen bevorzugten Ausgestaltung der Erfindung in der Steuerleitung nach dem Gebläse ein Bypass mit einem einstellbaren Druckabsteuerventil vorgesehen sein, was einen auch bei variierendem Volumenstrom konstanten Druck des Steuerstromes ergibt.

Die Erfindung wird im folgenden noch anhand der in der Zeichnung schematisch dargestellten Ausführungsbeispiele näher erläutert.
Fig. 1 zeigt dabei ein Prinzipbild einer erfindungsgemäßen Einrichtung bzw. einer Einrichtung zur Durchführung des erfindungsgemäßen Verfahrens, und die
Fig. 2 bis 5 zeigen in schematischer Detailansicht jeweils unterschiedlich ausgebildete Staubereiche in der Entnahmeleitung von erfindungsgemäßen Einrichtungen.

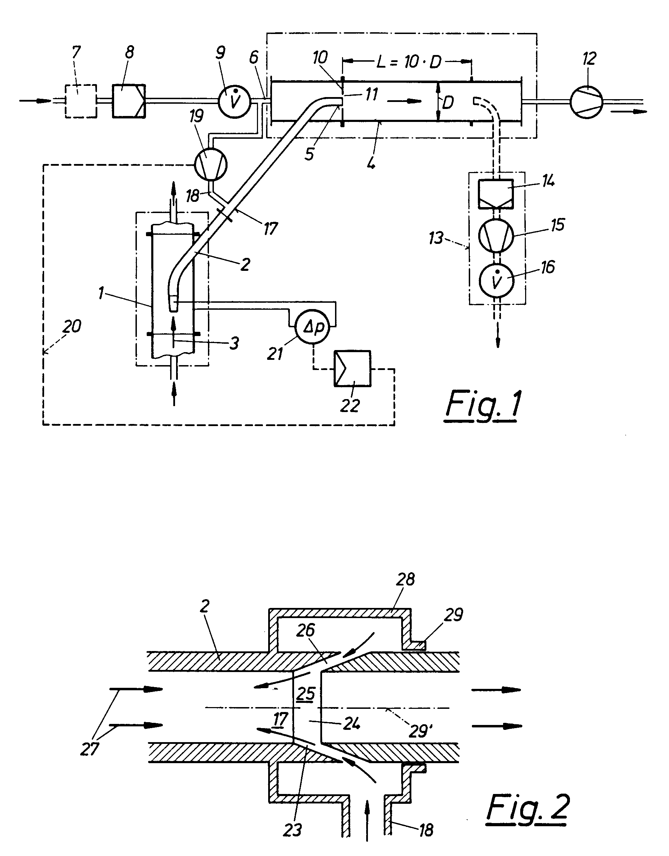

Die in Fig. 1 dargestellte Einrichtung zur stetigen Entnahme einer Teilmenge aus einem Gasstrom zur nachfolgenden stetigen Vermischung mit einem gasförmigen Verdünnungsstrom dient insbesonders zur Partikelmessung am Abgas von Diesel-Brennkraftmaschinen. In eine den sich in Richtung des Pfeiles 3 bewegenden Gasstrom führenden Sondenleitung 1 mündet eine Entnahmeleitung 2, welche eine Teilmenge aus dem Gasstrom abzweigt und einem Mischtunnel 4 zuführt. In den Mischtunnel 4 münden eingangsseitig das abströmseitige Ende 5 der Entnahmeleitung 2 sowie eine einen Verdünnungsstrom führende Zuführleitung 6. Der hier von Umgebungsluft gebildete Verdünnungsstrom wird dem Mischtunnel 4 über einen nur bedarfsweise vorgesehenen Kühler 7, eine Filtereinheit 8 und eine Einheit 9 zur Volumenstrommessung zugeführt und tritt an einem zwischen einer Festblende 10 und dem abströmseitigen Ende 5 der Entnahmeleitung 2 vorgesehenen Ringspalt 11 unter der Wirkung eines ausgangsseitig am Mischtunnel 4 vorgesehenen, steuerbaren Sauggebläses 12 ein.

Im Mischtunnel 4 wird die über die Entnahmeleitung 2 zugeführte Teilmenge mit dem am Ringspalt 11 eintretenden Verdünnungsstrom bei turbulenter Strömung homogen gemischt, um Imissionsbedingungen zu simulieren. Aus dem bei derartigen Einrichtungen üblicherweise von einem geraden Rohr aus elektrisch leitendem Material gebildeten Mischtunnel 4 wird am Ende der Mischstrecke (deren Länge L bei der genannten Abgasmessung den zehnfachen Durchmesser D des den Mischtunnel bildenden Rohres beträgt) ein geringer Teilstrom des verdünnten Gases über ein Meßgerät 13 abgesaugt. Dieses hier als Partikelsammelgerät ausgebildete Meßgerät 13 weist im wesentlichen eine Filtereinheit 14, eine Pumpe 15 und ein Volumenstrommeßgerät 16 auf und dient zur Anlagerung der im vom ursprünglichen Abgasstrom des Motors her stammenden Gasstrom bzw. in der abgezweigten und verdünnten Teilmenge enthaltenen Partikel auf üblicherweise teflonbeschichteten Glasfaserfiltern der Filtereinheit 14 zur weiteren Auswertung.

Da der Gasstrom in der Sondenleitung 1 nicht nur gemäß dem Motorzyklus sondern auch durch verschiedene Einflüsse bzw. Einstellungen bedingt im Mittelwert schwanken kann, wogegen der in der Entnahmeleitung 2 herrschende Druck durch den im wesentlichen konstanten Innendruck des Mischtunnels 4 bestimmt ist, wird eine Regelung des Volumenstroms der Teilmenge erforderlich. Zu diesem Zwecke ist hier in der Entnahmeleitung 2 der Teilmenge ein Staubereich 17 vorgesehen, in den eine Steuerleitung 18 mündet, welche einen abhängig vom Druck des Gasstromes in der Sondenleitung regelbaren Steuerstrom über ein Gebläse 19 führt.

Die Steuerleitung 18 ist im dargestellten Ausführungsbeispiel zwischen der Zuführleitung 6 des Verdünnungsstromes und der Entnahmeleitung 2 der Teilmenge vorgesehen; davon abweichend könnte dem Staubereich 17 der Steuerstrom aber auch unabhängig vom Verdünnungsstrom zugeführt werden. Ebenso wäre es auch möglich, anstelle der über die strichlierte Leitung 20 angedeuteten Regelung des Gebläses 19 hinsichtlich Druck und/oder Volumenstrom des Steuerstromes - abhängig von einem mit einem Differenzdruck-Transmitter 21 (für die Druckdifferenz zwischen Entnahmeleitung 2 und Sondenleitung 1) verbundenen Regler 22 - den Steuerstrom durch ein in der Steuerleitung 18 zwischen Gebläse 19 und Staubereich 17 angeordnetes, hier nicht dargestelltes, regelbares Drosselorgan zu beeinflussen. Ebenfalls könnte in diesem Zusammenhang in der Steuerleitung 18 nach dem Gebläse 19 ein wiederum nicht dargestellter Bypass mit einem regelbaren Druckabsteuerventil vorgesehen sein, um unabhängig vom jeweiligen Volumenstrom einen konstanten Druck im Steuerstrom sicherzustellen.

Zufolge des im Staubereich 17 regelbar eingebrachten Steuerstromes wird eine in ihrer Wirksamkeit regelbare "pneumatische Blende" gebildet, die ohne jede mechanische Einengung bzw. Beeinflussung des Querschnittes der Entnahmeleitung 2 eine Regelung des tatsächlich am abströmseitigen Ende 5 der Entnahmeleitung 2 austretenden Volumenstroms der Teilmenge ermöglicht.

Gemäß dem in Fig. 2 dargestellten Detail weist die Einmündung 23 der Steuerleitung 18 im Staubereich 17 der Entnahmeleitung 2 eine als Ringspalt 24 ausgebildete Steueröffnung 25 auf, wobei der an diese Steueröffnung 25 anschließende Bereich 26 (hier innerhalb der Wandstärke der Entnahmeleitung 2) der Steuerleitung 18 (bzw. deren Mündung) im wesentlichen gegen die durch die Pfeile 27 angedeutete Strömungsrichtung der Teilmenge gerichtet verläuft. Auf diese Weise entsteht ein Gegenstromeffekt durch den unter - relativ zum Teilstrom - Überdruck einströmenden Steuerstrom, der die Wirkung der pneumatischen Blende unterstützt.

Zur über den Umfang der Entnahmeleitung 2 gleichmäßigen Zuführung des Steuerstromes ist gemäß Fig. 2 ein am in der Darstellung linken Teil der Entnahmeleitung 2 fixiertes Gehäuse 28 vorgesehen, welches in einem Dichtungsbereich 29 gleitend gegen den in Richtung der Achse 29′ auf nicht weiter dargestellte Weise hin- und herbewegbaren rechten Teil der Entnahmeleitung 2 abdichtet. Durch die erwähnte Relativbewegung der beiden Teile der Entnahmeleitung 2 wird die effektive Größe des Ringspalts 24 bzw. der dadurch gebildeten Steueröffnung 25 verändert, was ähnlich wie die bereits oben genannte Anordnung eines Drosselorgans zwischen Gebläse und Staubereich eine Regelung des Steuerstroms ermöglicht.

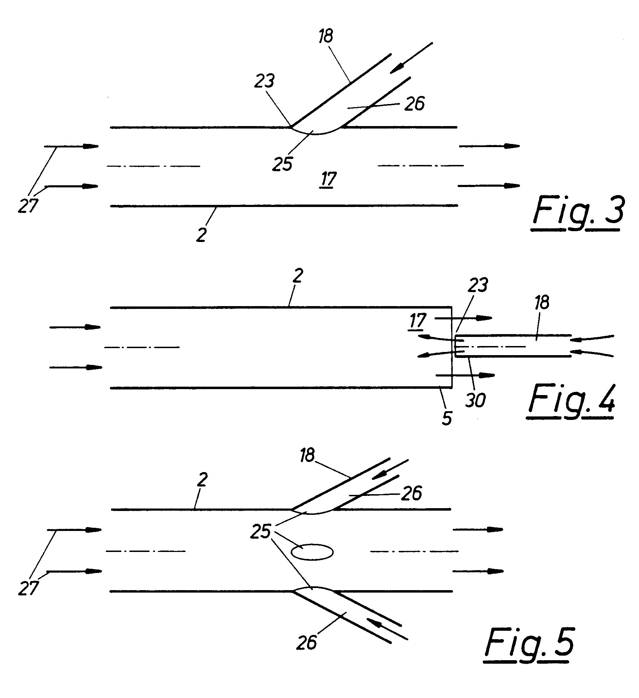

Gemäß Fig. 3 ist an der Einmündung 23 der Steuerleitung 18 im Staubereich 17 der Entnahmeleitung 2 nur eine einzelne Steueröffnung 25 am inneren Umfang der Entnahmeleitung 2 vorgesehen, wobei hier wiederum der an diese Steueröffnung 25 anschließende Bereich der Steuerleitung 18 gegen die durch die Pfeile 27 angedeutete Strömungsrichtung der Teilmenge gerichtet verläuft.

Eine der Fig. 3 ähnliche Ausbildung ist schematisch in Fig. 5 dargestellt; abweichend sind hier nun mehrere Steueröffnungen 25 am inneren Umfang der Entnahmeleitung 2 vorgesehen, wobei die anschließenden Bereiche der Steuerleitung 18 wieder gegen die Strömungsrichtung der Teilmenge verlaufen.

Bei der Ausführung gemäß Fig. 4 ist die Einmündung 23 der Steuerleitung 18 im Staubereich 17 der Entnahmeleitung 2 von einem zentral gegen das abströmseitige Ende 5 der Entnahmeleitung 2 gerichteten Mündungsrohrstück 30 gebildet, welches den Steuerstrom unmittelbar in das Abströmende der Entnahmeleitung 2 einbläst.

## Patentansprüche

1. Verfahren zur stetigen Entnahme einer Teilmenge aus einem Gasstrom zur nachfolgenden stetigen Vermischung mit einem gasförmigen Verdünnungsstrom, wobei die Teilmenge aus dem Gasstrom abgezweigt und zur Regelung des Volumenstromes der Teilmenge die Teilmenge vor der Vermischung mit dem Verdünnungsstrom durch einen Staubereich geführt wird, dem ein gegenüber dem Verdünnungsstrom erhöhten Druck aufweisender, regelbarer Steuerstrom zugeführt ist.

2. Verfahren nach Anspruch 1, dadurch gekennzeichnet, daß der Steuerstrom aus dem Verdünnungsstrom vor dessen Vermischung mit der Teilmenge abgezweigt und vor der Zuführung zum Staubereich komprimiert wird.

3. Verfahren nach Anspruch 2, dadurch gekennzeichnet, daß der Druck und/oder der zeitliche Volumenstrom des Steuerstromes abhängig vom Druck - insbesondere vom zeitlich gemittelten Druck - des Gasstromes geregelt wird.

4. Verfahren nach einem der Anprüche 2 oder 3, wobei der zugeführte Verdünnungsstrom gefiltert und gekühlt wird, dadurch gekennzeichnet, daß die Kühlung des Verdünnungsstromes vor der Filterung erfolgt.

5. Einrichtung zur stetigen Entnahme einer Teilmenge aus einem Gasstrom zur nachfolgenden stetigen Vermischung mit einem gasförmigen Verdünnungsstrom, mit einer den Gasstrom führenden Sondenleitung (1), in welche eine die Teilmenge abzweigende Entnahmeleitung (2) mündet, und einem Mischtunnel (4), in den eingangsseitig das abströmseitige Ende (5) der Entnahmeleitung (2) und eine den Verdünnungsstrom führende Zuführleitung (6) mündet, **dadurch gekennzeichnet**, daß in der Entnahmeleitung (2) der Teilmenge ein Staubereich (17) vorgesehen ist, in den eine Steuerleitung (18) mündet, über welche ein abhängig vom Druck des Gasstromes in der Sondenleitung (1) regelbarer Steuerstrom zugeführt wird.

6. Einrichtung nach Anspruch 5, dadurch gekennzeichnet, daß die Steuerleitung (18) zwischen der Zuführleitung (6) des Verdünnungsstromes und der Entnahmeleitung (2) der Teilmenge vorgesehen ist und ein Gebläse (19) aufweist.

7. Einrichtung nach Anspruch 5 oder 6, dadurch gekennzeichnet, daß der Staubereich (17) im Bereich des abströmseitigen Endes (5) der Entnahmeleitung (2) angeordnet ist.

8. Einrichtung nach einem der Ansprüche 5 bis 7, dadurch gekennzeichnet, daß die Einmündung (23) der Steuerleitung (18) im Staubereich (17) der Entnahmeleitung (2) eine oder mehrere Steueröffnung(en) (25) am inneren Umfang der Entnahmeleitung (2) aufweist.

9. Einrichtung nach Anspruch 8, dadurch gekennzeichnet, daß der an die Steueröffnung(en) (25) anschließende Bereich (26) der Steuerleitung (18) im wesentlichen gegen die Strömungsrichtung (27) der Teilmenge gerichtet verläuft.

10. Einrichtung nach Anspruch 7, dadurch gekennzeichnet, daß die Einmündung (23) der Steuerleitung (18) im Staubereich (17) der Entnahmeleitung (2) von einem im wesentlichen zentral gegen das abströmseitige Ende (5) der Entnahmeleitung (2) gerichteten Mündungsrohrstück (30) gebildet ist.

11. Einrichtung nach einem der Ansprüche 6 bis 10, dadurch gekennzeichnet, daß das Gebläse (19) in der Steuerleitung (18) hinsichtlich Druck und/oder Volumenstrom des Steuerstromes regelbar ist.

12. Einrichtung nach einem der Ansprüche 6 bis 11, dadurch gekennzeichnet, daß in der Steuerleitung (18) zwischen Gebläse (19) und Staubereich (17) ein regelbares Drosselorgan angeordnet ist.

13. Einrichtung nach Anspruch 8, dadurch gekennzeichnet, daß die Steueröffnung(en) (25) im Querschnitt verstellbar ist (sind).

14. Einrichtung nach einem der Ansprüche 6 bis 13, dadurch gekennzeichnet, daß in der Steuerleitung (18) nach dem Gebläse (19) ein Bypass mit einem einstellbaren Druckabsteuerventil vorgesehen ist.

## Claims

1. Process for the continuous removal of a part of a gas stream for subsequent continuous mixing with a gaseous diluting stream, the partial quantity being branched off out of the gas stream and the partial quantity being fed through a build-up zone for regulating the volume flow of the partial quantity before mixing with the diluting stream, there being fed to the build-up zone a regulatable control stream at a higher pressure than the diluting stream.

2. Process according to claim 1, characterised in that the control stream is branched off from the diluting stream before the latter is mixed with the partial quantity and is compressed before being fed to the build-up zone.

3. Process according to claim 2, characterised in that the pressure and/or the volume flow over a period of time, of the control stream is regulated in accordance with the pressure - in particular the pressure averaged with time - of the gas stream.

4. Process according to one of claims 2 or 3, the diluting stream which is fed in being filtered and cooled, characterised in that the cooling of the diluting stream takes place before the filtering.

5. Apparatus for the continuous removal of a part of a gas stream for subsequent continuous mixing with a gaseous diluting stream, with a sampling pipe (1) carrying the gas stream, into which opens an extraction pipe (2) for branching off a partial quantity, and a mixing tunnel (4) into the inlet end of which opens the outlet end (5) of the extraction pipe (2) as well as a supply pipe (6) carrying the diluting stream, characterised in that there is provided in the extraction pipe (2) for the partial quantity a build-up zone (17), into which opens a control pipe (18) through which is fed a control stream which can be regulated in accordance with the pressure of the gas stream in the sampling pipe (1).

6. Apparatus according to claim 5, characterised in that the control pipe (18) is provided between the pipe (6) which supplies the diluting stream and the extraction pipe (2), and has a blower (19).

7. Apparatus according to claim 5 or 6, characterised in that the build-up zone (17) is arranged in the neighbourhood of the outlet end (5) of the extraction pipe (2).

8. Apparatus according to one of claims 5 to 7, characterised in that the opening point (23) of the control pipe (18) in the build-up zone (17) of the extraction pipe (2) has one or more control openings (25) at the inner periphery of the extraction pipe (2).

9. Apparatus according to claim 8, characterised in that the region (26) of the control pipe (18) adjacent to the control opening or openings (25) extends in a direction substantially opposite to the direction of flow of the partial quantity.

10. Apparatus according to claim 7, characterised in that the point (23) where the control pipe (18) opens into the build-up zone (17) of the extraction pipe (2) is formed by a tubular mouth-piece (30) directed substantially centrally against the outlet end (5) of the extraction pipe (2).

11. Apparatus according to one of claims 6 to 10, characterised in that the blower (19) in the control pipe (18) is capable of being regulated with regard to pressure and/or volume flow of the control stream.

12. Apparatus according to one of claims 6 to 11, characterised in that a regulatable throttle member is arranged in the control pipe (18) between the blower (19) and the build-up zone (17).

13. Apparatus according to claim 8, characterised in that the control opening or openings (25) is or are of adjustable cross-section.

14. Apparatus according to one of claims 6 to 13 characterised in that a bypass with an adjustable pressure reducing valve is provided in the control pipe (18) following the blower (19).

## Revendications

1. Procédé de prélèvement continu sur un courant de gaz d'un courant partiel en vue de son mélange continu subséquent avec un courant de dilution gazeux, dans lequel le courant partiel est dérivé du courant de gaz et pour le réglage du débit volumique du courant partiel, ce dernier est conduit, avant le mélange avec le courant de dilution, dans une zone d'arrêt dans laquelle est injecté un courant de commande réglable, présentant une pression augmentée par rapport à celle du courant de dilution.

2. Procédé selon la revendication 1, caractérisé en ce que le courant de commande est dérivé du courant de dilution, avant son mélange avec le courant partiel, et est comprimé avant l'injection dans la zone d'arrêt.

3. Procédé selon la revendication 2, caractérisé en ce que la pression et/ou le débit volumique instantané du courant gazeux est réglé en fonction de la pression - en particulier en fonction de la pression moyennée instantanée - du courant gazeux.

4. Procédé selon l'une des revendications 2 ou 3, dans lequel le courant de dilution amené est filtré et refroidi, caractérisé en ce que le refroidissement du courant de dilution est réalisé avant la filtration.

5. Dispositif de prélèvement continu d'une quantité partielle d'un courant de gaz en vue de son mélange continu subséquent avec un courant de dilution gazeux, muni d'une conduite de sondage (1) conduisant le courant de gaz et dans laquelle débouche une conduite de prélèvement (2) prélevant la quantité partielle et d'un tunnel de mélange (4) dans lequel débouche, du côté de l'entrée, l'extrémité aval (5) de la conduite de prélèvement (2) et une conduite d'amenée (6) conduisant le courant de dilution, caractérisé en ce qu'il est prévu dans la conduite de prélèvement (2) du courant partiel une zone d'arrêt (17) dans laquelle débouche une conduite de commande (18) par laquelle est injecté un courant de commande réglable en fonction de la pression du courant gazeux dans la conduite de sondage (1).

6. Dispositif selon la revendication 5, caractérisé en ce que la conduite de commande (18) est prévue entre la conduite d'amenée (6) du courant de dilution et la conduite de prélèvement (2) de la quantité partielle et comporte un organe de soufflage ou soufflante (19).

7. Dispositif selon la revendication 5 ou 6, caractérisé en ce que la zone d'arrêt (17) est disposée dans la région de l'extrémité (5) du côté aval de la conduite de prélèvement (2).

8. Dispositif selon l'une des revendications 5 à 7, caractérisé en ce que le débouché (23) de la conduite de commande (18) comporte, dans la zone d'arrêt (17) de la commande de prélèvement (2), une ou plusieurs ouverture(s) de commande (25), à la périphérie intérieure de la conduite de prélèvement (2).

9. Dispositif selon la revendication 8, caractérisé en ce que la zone (26) de la conduite de commande (18) se raccordant à l'(aux) ouverture(s) de commande (25) est orientée sensiblement à contre-courant de la direction d'écoulement (27) de la quantité partielle.

10. Dispositif selon la revendication 7, caractérisé en ce que le débouché (23) de la conduite de commande (18) dans la zone d'arrêt (17) de la conduite de prélèvement (2), est constitué par un tronçon tubulaire d'embouchure (30), orienté de façon sensiblement centrale en face de l'extrémité aval (5) de la conduite de prélèvement (2).

11. Dispositif selon l'une des revendications 6 à 10, caractérisé en ce que la soufflante (19) est montée dans la conduite de commande (18), réglable en ce qui concerne la pression et/ou le débit volumique du courant de commande.

12. Dispositif selon l'une des revendications 6 à 11, caractérisé en ce qu'un organe d'étranglement réglable est disposé dans la conduite de commande (18) entre la soufflante (19) et la zone d'arrêt (17).

13. Dispositif selon la revendication 8, caractérisé en ce que la (ou les) ouverture(s) de commande (25) présente(nt) une section transversale réglable.

14. Dispositif selon l'une des revendications 6 à 13, caractérisé en ce qu'il est prévu dans la conduite de commande (18) à l'aval de la soufflante (19) une dérivation munie d'une valve réglable de détente de pression.
